(19) **Europäisches Patentamt European Patent Office Office européen des brevets**

(11) **EP 2 354 695 A1**

(12) **EUROPEAN PATENT APPLICATION**

(43) Date of publication:
**10.08.2011 Bulletin 2011/32**

(21) Application number: **09425539.5**

(22) Date of filing: **29.12.2009**

(51) Int Cl.:
*F24F 11/053* (2006.01)　　*F24F 12/00* (2006.01)

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: SAVIO S.p.A.
**10050 Chiusa San Michele (Torino) (IT)**

(72) Inventors:
 • **Balbo di Vinadio, Aimone**
 **10050 Chiusa San Michele (Torino) (IT)**
 • **Palazzetti, Mario**
 **10050 Chiusa San Michele (Torino) (IT)**

(74) Representative: **Marchitelli, Mauro**
 **Buzzi, Notaro & Antonielli d'Oulx Srl**
 **Via Maria Vittoria 18**
 **10123 Torino (IT)**

(54) **Air-exchange device for buildings, and process for controlling said device**

(57)  An air-exchange device for buildings, set between an external environment (O) and an internal environment (I), comprising:
- a first electric motor (M1) associated to a first fan, which generates a first airflow (Q1) directed from the external environment (O) to the internal environment (I);
- a second electric motor (M2) associated to a second fan, which generates a second airflow (Q2) directed from the internal environment (I) to the external environment (O);

- a heat exchanger (14) traversed by said first and second airflows (Q1, Q2) and pre-arranged for transferring thermal energy between said flows; and
- a control device (23), which controls the second electric motor (M2) as a function of the difference between:
a) the difference between the temperatures (T1", T1') of the first airflow (Q1) respectively at outlet from and at inlet to said heat exchanger (14), and
b) the difference between the temperatures (T2', T2") of the second airflow (Q2) respectively at inlet to and at outlet from said heat exchanger (14).

**FIG. 1**

EP 2 354 695 A1

**Description**

**Background of the invention**

The present invention relates to a device for the exchange of air in an environment of a building and a process for controlling said device.

More precisely, the invention relates to an air-exchange device comprising a first electric motor associated to a first fan that generates a first airflow directed from the external environment towards the internal environment, and a second electric motor associated to a second fan that generates a second airflow directed from the internal environment towards the external environment and in which the two airflows are in a mutual heat-exchange relationship for recovering a part of the energy of the airflow directed from the internal environment towards the external environment.

**Description of the relevant art**

The document No. EP-A-1 690 045 describes a wall-mounted ventilation device mounted as a window sill and equipped with a heat exchanger traversed by two opposed airflows produced by respective electric fans.

In air-exchange devices of this type it would be desirable to control the electric motors associated to the fans so as to optimize the efficiency of the heat exchanger. However, the optimization of the efficiency of the heat exchanger presupposes the use of air-flowrate sensors that are costly.

**Object and summary of the invention**

The object of the present invention is to provide an air-exchange device and a process for controlling an air-exchange device that will enable optimization of the heat-exchange efficiency without the need to use costly sensors, such as flowrate sensors.

According to the present invention, the above object is achieved by an air-exchange device and by a process for controlling said device having the characteristics forming the subject of Claims 1 and 6.

The claims form an integral part of the technical teaching provided herein in relation to the invention.

**Brief description of the drawings**

The present invention will now be described in detail with reference to the attached drawings, which are provided purely by way of non-limiting example, and in which:

- Figure 1 is a schematic cross section illustrating an air-exchange device mounted in a wall of a building;
- Figure 2 is a diagram illustrating a first embodiment of a control device according to the present invention; and
- Figure 3 is a diagram illustrating a second embodiment of a control device according to the present invention.

**Detailed description of preferred embodiments**

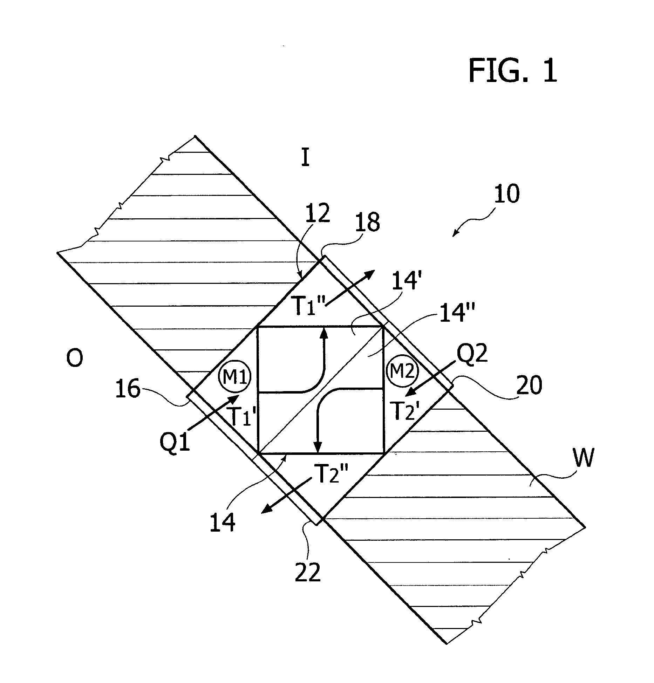

With reference to Figure 1, designated by 10 is an air-exchange device inserted in an opening of a wall W that separates an internal environment I from an external environment O. The air-exchange device 10 comprises a casing 12 housed within which is a crossflow heat exchanger 14. The casing 12 contains a first electric motor M1 and a second electric motor M2. The motors M1, M2 are associated to respective fans, which are designed to generate respective airflows with flowrates Q1 and Q2. The first airflow Q1 is taken from the external environment O through an opening 16 and, after traversing a first section 14' of the heat exchanger 14, is introduced into the internal environment I through an opening 18. The second airflow Q2 is taken from the internal environment I through an opening 20 and, after traversing a second section 14" of the heat exchanger 14, is introduced into the external environment O through an opening 22. The heat exchanger 14 exchanges thermal energy between the airflows Q1 and Q2.

The efficiency of the heat exchanger 14 is maximum when the flowrates Q1 and Q2 of the two airflows are the same as one another.

In order to control operation of the motors M1 and M2 to maximize the efficiency of the heat exchanger 14, it would be necessary to have available flowmeters designed to measure the flowrates Q1 and Q2. However, the use of flowmeters would render the control system excessively costly.

The ensuing considerations enable provision of a control system that maximizes the efficiency of the heat exchanger 14 without use of flowmeters.

It is assumed that the heat exchanger 14 is adiabatic. This is equivalent to assuming that the heat exchanger 14 does not exchange energy with the outside. Consequently, the airflows Q1 and Q2 that traverse the heat exchanger 14 exchange energy only with one another. With this assumption (which is substantially correct from the practical standpoint) we have that the variation of energy of the airflow Q1 through the heat exchanger 14 is equal to the variation of energy of the airflow Q2. In analytical terms:

$$cp*Q1*(T1''-T1') = cp*Q2*(T2'-T2'')$$

where:

cp is the specific heat at constant pressure of the air;
Q1 and Q2 are the air flowrates that traverse the heat exchanger 14;
T1' and T1" are the temperatures of the airflow Q1 respectively at inlet to and outlet from the heat exchanger 14; and
T2' and T2" are the temperatures of the airflow Q2, respectively at inlet to and outlet from the heat exchanger 14.

From the foregoing relation we obtain that Q1/Q2= (T2' -T2") / (T1"-T1' )
In conditions of maximum efficiency we should have Q1=Q2. Consequently,
(T2'-T2")=(T1"-T1')
i.e.,
(T1"-T1')-(T2'-T2")=0.
On the basis of the aforesaid considerations, it may be deduced that it is possible to maximize the efficiency of the heat exchanger 14 by controlling the speeds of the motors M1 and M2 so as to set to zero the difference between:

a) the difference between the temperature T1" of the first airflow Q1 at outlet from the heat exchanger 14 and the temperature T1' of the first airflow Q1 at inlet to the heat exchanger 14; and
b) the difference between the temperature T2' of the second airflow Q2 at inlet to the heat exchanger 14 and the temperature T2" of the second airflow Q2 at outlet from the heat exchanger 14.

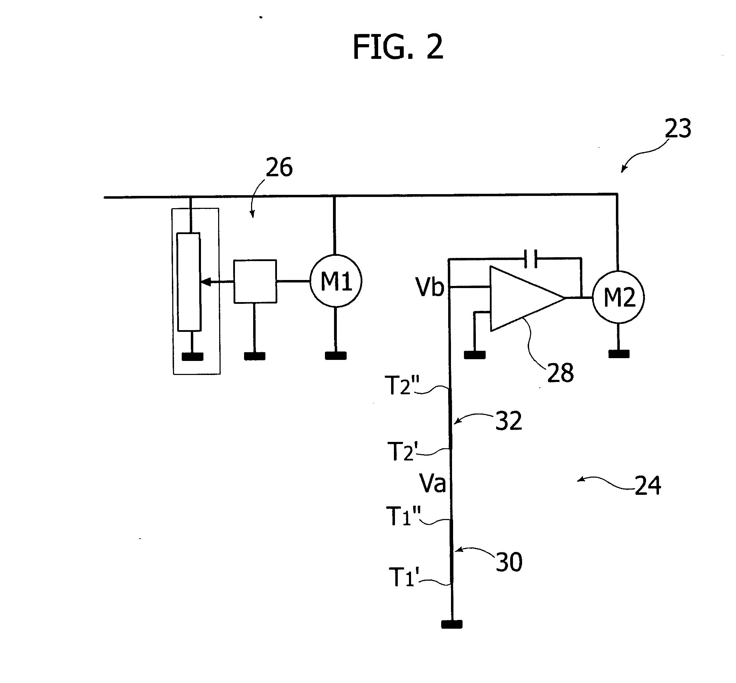

Figure 2 illustrates a simplified embodiment of a control device 23 designed to govern the motors M1 and M2 so as to provide the aforesaid condition of maximum efficiency. In the scheme of Figure 2 the motor M1 is a master motor, the r.p.m. of which can be set by means of a regulator 26, for example, of the potentiometric type. The motor M2 is a slave motor, the r.p.m. of which is varied as a function of the temperatures T2", T2', T1", T1'. The control device 23 comprises a main control circuit 24 associated to the motor M2. The main control circuit 24 comprises a comparator 28 that drives the motor M2 as a function of a voltage Vb.
According to a particularly advantageous embodiment, the main control circuit 24 comprises a first thermocouple 30 and a second thermocouple 32 that enable direct driving of the servo system, thus preventing electrically burdensome operations.
The thermocouples 30, 32 are connected in series with one another. The first thermocouple 30 supplies a voltage Va proportional to the difference in temperature T1"-T1'. The second thermocouple 32 supplies a voltage proportional to the difference in temperature T2"-T2'. The resulting voltage Vb is proportional to (T1"-T1')+(T2"-T2') i.e., Vb is proportional to (T1"-T1')-(T2'-T2").
If Vb > 0, it means that the difference in temperature T1"-T1' is greater than the difference in temperature T2'-T2". Consequently, the speed of the motor M2 is increased. If, instead, Vb < 0 the difference in temperature T1"-T1' is smaller than the difference in temperature T2'-T2". In this case, the speed of the motor M2 is decreased. The system tends constantly to move into a situation of equilibrium in which the differences in temperature T1"-T1' and T2'-T2" are the same as one another. This is the situation that corresponds to the maximum efficiency of the heat exchanger 14.

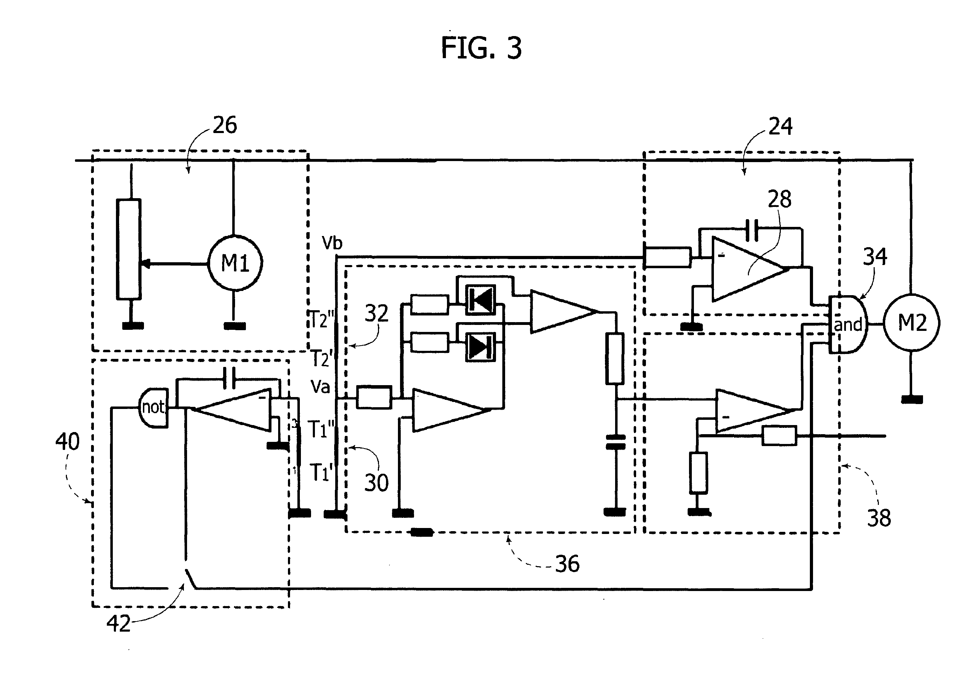

Figure 3 illustrates a more advanced scheme of the control device 23. The elements corresponding to the ones described previously are designated by the same reference numbers. As in the case described previously, a main control circuit 24 is provided, including a comparator 28, which receives the voltage signal Vb supplied by the series of two thermocouples 30, 32, which detect, respectively, the differences in temperature T1"-T1' and T2"-T2'. In the variant illustrated in Figure 3, the signal of the comparator 28 is sent to an AND logic gate 34, which drives the motor M2.
The control device 23 comprises a circuit 36 that detects the absolute value of the difference in temperature T1"-T1'. The absolute value of the difference T1"-T1' is sent to a comparator circuit 38, which compares the absolute value of the difference T1"-T1' with a pre-set threshold, for example of the order of 2-3°C. The comparator circuit 38 supplies a first control signal to the AND logic gate 34. The first control signal indicates whether the absolute value of the difference T1"-T1' is higher than a pre-set temperature threshold.
The control device 23 of Figure 3 further comprises a circuit 40, which supplies the sign of the difference in temperature T1"-T1'. The circuit 40 comprises a two-position selector 42 indicating the season: winter or summer. The selector 42 can be a switch that can be set manually or else an algorithm, for example based upon a calendar. The circuit 40 supplies a second control signal to the AND logic gate 34, which indicates in winter whether the difference in temperature T1"-T1' is positive or else in summer whether the difference in temperature T1'-T1" is positive.

The AND logic gate 34 inhibits operation of the motor M2 if one of the two control signals is not verified. The first control signal indicates whether the difference in temperature T1"-T1' is higher than a pre-set threshold. If this control signal is not verified, it means that the temperature of the external environment O is very close to the temperature of the internal environment I. In these conditions, the energy that can be recovered by the heat exchanger 14 is close to zero. In these conditions, it is more convenient to de-activate the motor M2.

The second control signal inhibits operation of the motor M2 when in winter the temperature of the external environment O is higher than the temperature of the internal environment I and when in summer the temperature of the external environment O is lower than the temperature of the internal environment I. In these conditions, it is more convenient from the energy standpoint to send air from the external environment O to the internal environment I via the motor M1 keeping the motor M2 de-activated.

The present invention enables a simple and inexpensive control circuit to be obtained, which maximizes the efficiency of the heat exchanger 14 without requiring the use of high-cost flowrate sensors. The invention moreover enables increase in the energy yield of the air-exchange device 10 in given environmental conditions.

The present invention may undergo numerous variations without thereby departing from the scope of the invention, as defined in the ensuing claims.

## Claims

1. An air-exchange device for buildings, set between an external environment (O) and an internal environment (I), comprising:

   - a first electric motor (M1), associated to a first fan, which generates a first airflow (Q1) directed from the external environment (O) to the internal environment (I);
   - a second electric motor (M2), associated to a second fan, which generates a second airflow (Q2) directed from the internal environment (I) to the external environment (O); and
   - a heat exchanger (14) traversed by said first and second airflows (Q1, Q2) and provided for transferring thermal energy between said flows, said device being **characterized in that** it comprises a control device (23), which controls the second electric motor (M2) as a function of the difference between:

      a) the difference between the temperatures (T1", T1') of the first airflow (Q1) respectively at outlet from and at inlet to said heat exchanger (14), and
      b) the difference between the temperatures (T2', T2") of the second airflow (Q2) respectively at inlet to and at outlet from said heat exchanger (14).

2. The air-exchange device according to Claim 1, **characterized in that** the control device (23) controls the r.p.m. of the second electric motor (M2) so as to cause the following equation to be met:

$$(T1"-T1') - (T2'-T2") = 0$$

   where:

   T1' and T2" are the temperatures of the first airflow (Q1) respectively at inlet to and at outlet from said heat exchanger (14); and
   T2' and T2" are the temperatures of said second airflow (Q2) respectively at inlet to and at outlet from said heat exchanger (14).

3. The air-exchange device according to Claim 1 or Claim 2, **characterized in that** it comprises a first thermocouple (30) and a second thermocouple (32) connected in series to one another, wherein the first thermocouple (30) supplies a signal proportional to the difference in temperature (T1"-T1') of the first airflow (Q1) respectively at outlet from and at inlet to said heat exchanger (14) and wherein the second thermocouple (32) supplies a signal proportional to the difference in temperature (T2"-T2') of the second airflow (Q2) respectively at outlet from and at inlet to said heat exchanger (14).

4. The air-exchange device according to any one of the preceding claims, **characterized in that** it comprises a logic gate (34), which inhibits operation of the second motor (M2) when the absolute value of the difference in temperature (T1"-T1') between the temperatures of the first airflow (Q1) respectively at outlet from and at inlet to said heat exchanger (14) is less than a reference threshold.

5. The air-exchange device according to any one of Claims 1 to 3, **characterized in that** it comprises a logic gate (34) that inhibits operation of said second motor (M2) when in winter the sign of the difference in temperature (T1"-T1') between the temperatures of the first airflow (Q1) respectively at outlet from and at inlet to said heat exchanger (14) is negative and when in summer said difference in temperature (T1"-T1') is positive.

6. A process for controlling an air-exchange device for buildings set between an internal environment (I) and an external environment (O), comprising:

   - a first electric motor (M1) associated to a first fan, which generates a first airflow (Q1) directed from the external environment (O) to the internal environment (I);
   - a second electric motor (M2) associated to a second fan, which generates a second airflow (Q2) directed from the internal environment (I) to the external environment (O); and
   - a heat exchanger (14) traversed by said first and second airflows (Q1, Q2) and pre-arranged for transferring thermal energy between said flows, the process being **characterized in that** the r.p.m. of said second electric motor (M2) is varied as a function of the difference between:

   a) the difference between the temperatures (T1"-T1') of the first airflow (Q1) respectively at outlet from and at inlet to said heat exchanger (14), and
   b) the difference between the temperatures (T2'-T2") of the second airflow (Q2) respectively at inlet to and at outlet from said heat exchanger (14).

FIG. 1

EP 2 354 695 A1

# FIG. 2

# FIG. 3

EP 2 354 695 A1

Europäisches
Patentamt

European
Patent Office

Office européen
des brevets

# EUROPEAN SEARCH REPORT

**Application Number**

EP 09 42 5539

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/102227 A2 (LIETAER JAN [BE]) 28 August 2008 (2008-08-28) * paragraphs [0009], [0 19], [0 28], [0 33], [0 34] * | 1-6 | INV. F24F11/053 F24F12/00 |
| X | EP 1 479 982 A1 (KRISTINSSON REITSEMA B V [NL]; FIWIHEX B V [NL]) 24 November 2004 (2004-11-24) * paragraph [0012] * | 1-6 | |
| X | WO 2009/018652 A1 (AIR TECH EQUIPMENT LTD [CA]; BOUDREAU PATRICK PAUL [CA]; BOULAY MICHAE) 12 February 2009 (2009-02-12) * paragraph [0024] - paragraph [0028] * * paragraph [0032] * * paragraph [0034] - paragraph [0036] * | 1,6 | |
| A | WO 2005/045325 A1 (BAEK CHANG-IN [KR]) 19 May 2005 (2005-05-19) * the whole document * | 1-6 | |
| A | DE 42 43 429 A1 (HANSA VENTILATOREN MASCH [DE] HANSA VENTILATOREN U MASCHB NE [DE]) 16 June 1994 (1994-06-16) * abstract * | 1-6 | TECHNICAL FIELDS SEARCHED (IPC) F24F |

The present search report has been drawn up for all claims

| Place of search | Date of completion of the search | Examiner |
|---|---|---|
| Munich | 9 June 2010 | Vuc, Arianda |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 09 42 5539

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2010

| Patent document cited in search report | | Publication date | Patent family member(s) | | Publication date |
|---|---|---|---|---|---|
| WO 2008102227 | A2 | 28-08-2008 | BE | 1017474 A7 | 07-10-2008 |
| EP 1479982 | A1 | 24-11-2004 | CA | 2525879 A1 | 02-12-2004 |
| | | | CN | 1795351 A | 28-06-2006 |
| | | | DE | 60311073 T2 | 08-11-2007 |
| | | | DK | 1479982 T3 | 21-05-2007 |
| | | | WO | 2004104487 A1 | 02-12-2004 |
| | | | ES | 2280686 T3 | 16-09-2007 |
| | | | HK | 1087766 A1 | 10-07-2009 |
| | | | JP | 4422150 B2 | 24-02-2010 |
| | | | JP | 2007501375 T | 25-01-2007 |
| | | | KR | 20060028763 A | 03-04-2006 |
| | | | PT | 1479982 E | 30-04-2007 |
| | | | RU | 2315917 C2 | 27-01-2008 |
| | | | US | 2007095523 A1 | 03-05-2007 |
| WO 2009018652 | A1 | 12-02-2009 | CA | 2596151 A1 | 03-02-2009 |
| | | | CA | 2695014 A1 | 12-02-2009 |
| WO 2005045325 | A1 | 19-05-2005 | CN | 1902447 A | 24-01-2007 |
| | | | JP | 2007510885 T | 26-04-2007 |
| | | | KR | 20050043332 A | 11-05-2005 |
| DE 4243429 | A1 | 16-06-1994 | SE | 517078 C2 | 09-04-2002 |
| | | | SE | 9303467 A | 16-06-1994 |

EPO FORM P0459

For more details about this annex : see Official Journal of the European Patent Office, No. 12/82

**REFERENCES CITED IN THE DESCRIPTION**

**Patent documents cited in the description**

• EP 1690045 A